# EUROPÄISCHE PATENTSCHRIFT

(11) **EP 1 908 989 B1**
(45) Veröffentlichungstag und Bekanntmachung des Hinweises auf die Patenterteilung: **15.02.2012**
(21) Anmeldenummer: 08100647.0
(22) Anmeldetag: 30.09.2003
(51) Int. Cl.: F16F 15/139

(54) **Drehschwingungsdämpfer**
Torsional vibration damper
Amortisseur de vibrations torsionnelles

(43) Veröffentlichungstag der Anmeldung: 09.04.2008
(62) Teilanmeldung aus: 03103619.7
(73) Patentinhaber: Getrag Ford Transmissions GmbH, 50725 Köln (DE)
(72) Erfinder: Absenger, Marc, 42285 Wuppertal (DE); Petri, Hans, 53804 Much (DE)

(56) Entgegenhaltungen:
- DE-A- 19 614 002
- DE-A- 19 832 139
- US-A- 4 583 959

## Beschreibung

Die Erfindung betrifft einen Drehschwingungsdämpfer insbesondere für Kraftfahrzeuge. Der Drehschwingungsdämpfer weist ein erstes Drehteil und ein zweites Drehteil auf, wobei die beiden Drehteile auf einer Drehachse angeordnet sind und entgegen einer Wirkung wenigstens eines Energiespeichers retativ zueinander drehbeweglich sind, bei einer Drehbewegung zwischen erstem und zweitem Drehteil wenigstens ein Reibelement entlang einer Reibfläche gleitet und wobei wenigstens eine Feder das Reibelement gegen die Reibfläche drückt.

Derartige Drehschwingungsdämpfer in Form von sogenannten Zweimassenschwungrädern sind unter anderem aus der DE 40 30 285 A1, DE 102 41 879 A1 oder der DE 44 17 660 A1 bekannt. Beispielsweise offenbart die DE 40 30 285 A1 einen Drehschwingungsdämpfer, dessen erstes Drehteil über eine Nabe mit einer Motorkurbelwelle verbunden ist. Das zweite Drehteil besitzt eine Platte die als Schwungrad einer Kupplung dient. Somit ist der Drehschwingungsdämpfer zwischen Motor und Kupplung geschaltet. Das erste Drehteil und das zweite Drehteil bieten jeweils eine Auflage für Schraubenfedern, die einer relativen Drehbewegung der beiden Drehteile entgegenwirken, so daß Drehschwingungen im Antriebsstrang gedämpft werden können. Des weiteren tragen eine Vielzahl von Reibelementen zur Dämpfung bei, die auf eine ringförmige Umfangsfläche des zweiten Drehteils durch elastische Zwischenstücke gedrückt werden.

In der US 4 583 959 A ist ein Drehschwingungsdämpfer, insbesondere für Kupplungsscheiben in Reibkupplungen von Kraftfahrzeugen, offenbart, der einen fest auf einer Nabe angeordneten Flansch besitzt. Zu beiden Seiten des Flansches ist drehbeweglich zur Nabe koaxial jeweils eine Drehscheibe angeordnet, wobei die Drehscheiben miteinander verbunden sind, und wobei die Drehscheiben mit dem Flansch über ein in Umfangsrichtung angeordnetes Torsionsfedersystem in Verbindung stehen. Zwischen dem Flansch und einer Drehscheibe befindet sich, auf der Nabe koaxial angeordnet, eine axial wirkende Federeinrichtung, die aus einer Wellenfeder und einer Reibungsplatte mit einer der Wellenfeder angepassten, wellenförmigen Oberfläche besteht. Wellenfeder und Reibungsplatte sind drehfest mit dem jeweils benachbarten Bauteil, entweder mit dem Flansch oder mit einer der Drehscheiben, verbunden. Im Betriebszustand werden Wellenfeder und Reibungsplatte gegeneinander verdreht. Durch Reibung wird ein Hysterese-Drehmoment erzeugt, so dass Drehmoment-Vibrationen gedämpft werden. Eine Reibfläche der Reibungsplatte ist als Rampe ausgebildet, wodurch beim Gleiten der Wellenfeder entlang der Reibfläche die Federeinrichtung verschieden weit ausgelenkt ist.

Der Erfindung liegt die Aufgabe zu Grunde, Drehschwingungsdämpfer der vorerwähnten Art bezüglich deren Dämpfungsverhälten zu optimieren.

Die der Erfindung zu Grunde liegende Aufgabe wird dadurch gelöst, dass das Reibelement und die Reibfläche ein Element einer Ringfeder (Ringfederelement) bilden. Die Ringfeder umfasst mehrere Innenringe und Außenringe, wobei ein Innenring wenigstens eine nach außen gerichtete Kegelfläche und ein Außenring wenigstens eine nach innen gerichtete Kegelfläche aufweist. Ein Innenring und ein Außenring berühren sich an ihren Kegelflächen, wobei diese wirksame Kegelfläche hier als ein Ringfederelement gelten soll. Eine Ringfeder zeichnet sich durch einen hohen Gewichtsnutzwert (Federarbeit und Dämpfungsarbeit bezogen auf das Gewicht) aus und kann vergleichsweise große Energien aufnehmen.

Ein Innenring einer Ringfeder weist an seinem Außenumfang zwei nach außen gerichtete Kegelflächen auf, während sein Innenumfang zylindrisch ausgeformt ist, so daß das Profil des Innenrings in etwa die Form eines gleichschenkligen Dreiecks hat. Der Außenring weist hingegen an seinem Innenumfang zwei nach innen gerichtete Kegelflächen und einen zylindrischen Außenumfang auf. Innenring und Außenring sind abwechselnd in axialer Richtung der Ringfeder hintereinander angeordnet, wobei ein halber Innenring und ein halber Außenring eine wirksame Kegelfläche und somit ein Ringfederelement bilden.

Wird die Ringfeder mit einer axialen Kraft beaufschlagt, dehnen sich die Außenringe, während die Innenringe gestaucht werden. Der Außenring schiebt sich entlang der Kegelfläche auf den Innenring. Die höchste Beanspruchung erfahren dabei die Ringe in tangentialer Richtung.

Die durch das Gleiten des Reibelements auf der Reibfläche verursachte Reibkraft ist abhängig von der Kraft, mit der das Reibelement gegen die Reibfläche gedrückt wird. Die Feder, die das Reibelement gegen die Reibfläche drückt, wird in Abhängigkeit des Weges der Reibelements entlang der Reibfläche verschieden weit auseinander gezogen oder gedehnt beziehungsweise zusammengedrückt oder gestaucht, Die Verformung der Feder ist bei elastischen Federn nach dem Hook'schen Gesetz proportional zu der Federkraft. Somit verändert sich mit der Position des Reibelementes auf der rampenförmige Reibfläche die Reibkraft. Die Reibkraft ist folglich eine Funktion der Position des Reibelements auf der Reibfläche.

Die Reibkraft wiederum beeinflusst das Dämpfungsverhalten des Drehschwingungsdämpfers. Daher lässt sich durch die Form der Rampe und durch die Wahl der Feder beziehungsweise der Federkonstanten das Dämpfungsverhalten des Drehschwingungsdämpfers gezielt beeinflussen. Dies gilt insbesondere dann, wenn die Position des Reibelements auf der Rampe eindeutig von einem Verdrehwinkel zwischen dem ersten und zweiten Drehteil abhängt, wobei der Verdrehwinkel in einer statischen Ruhelage den Wert null annehmen soll. So lässt sich jedem Verdrehwinkel eine definierte Federkraft und damit eine definierte Reibkraft zuordnen.

Die Rampe kann linear ansteigen, so daß mit dem auf der Rampe zurückgelegten Weg des Reibelements die Federkraft ebenfalls linear ansteigt. Die Rampe kann aber auch nach einer beliebigen, nicht-linearen Funktion ansteigen, einen höchsten Punkt aufweisen und danach wieder abfallen.

Der Drehschwingungsdämpfer kann eine Vielzahl von Reibelementen aufweisen, die auf jeweils unterschiedlich geformten Reibflächen gleiten. Beispielsweise kann ein Reibelement derart ausgelegt sein, daß es erst bei einem bestimmten Verdrehwinkel Reibung erzeugt. Auch können die Federkräfte, mit denen die jeweiligen Reibelement beaufschlagt werden, in einem weiten Maße unterschiedlich sein.

Der Außenring (für den Innenring gilt sinngemäß das gleiche) kann dabei als Reibelement aufgefasst werden, das entlang einer Rampe, nämlich entlang der Kegelfläche, bewegt wird. Dabei wird das Reibelement beziehungsweise der Außenring aufgrund des gedehnten Zustands des Außenrings gegen die Reibfläche beziehungsweise gegen den Innenring gedrückt. Reibelement und die das Reibelement auf die Reibfläche drückende Feder sind folglich in diesem Ausführungsbeispiel einstückig in Form des Außenrings ausgebildet. Wird der Außenring weiter auf den Innenring geschoben, wird der Außenring weiter verformt, was den Druck und damit die Reibung zwischen Außenring und Innenring weiter ansteigen lässt.

Die Ringfeder kann einen maximalen Federweg aufweisen, der durch Anlage von stirnseitigen Enden der Innenringe und/oder durch Anlage von stirnseitigen Enden der Außenringe definiert wird. Dabei bilden die Innenringe eine starre Säule und/oder die Außenringe eine starre Säule, die in axialer Richtung der Ringfeder nicht weiter zusammengedrückt werden können. So ist sichergestellt, daß die durch die Dehnungen und Stauchungen verursachten tangentialen Spannungen in den Ringen die zulässigen Spannungswerte nicht überschreiten.

In einem bevorzugten Ausführungsbeispiel verläuft die Achse der Ringfeder im Wesentlichen in Umfangsrichtung des ersten und zweiten Drehteils, wobei ein erstes stirnseitiges Ende der Ringfeder sich in Umfangsrichtung an dem ersten Drehteil abstützt und ein zweites stirnseitiges Ende der Ringfeder sich in Umfangsrichtung an dem zweiten Drehteil abstützt. Wenn die beiden Drehteile zueinander verdreht werden, ändert sich der Abstand zwischen den beiden stirnseitigen Enden: die Ringfeder wird ausgelenkt. Der Federweg der Ringfeder ist damit in guter Näherung proportional zu dem Verdrehwinkel und dem radialen Abstand der Ringfeder zu der Drehachse.

Vorzugsweise ist in Umfangsrichtung des ersten und zweiten Drehteils zwischen dem ersten stirnseitigen Ende der Ringfeder und dem ersten Drehteil wenigstens eine erste Schraubenfeder angeordnet. Alternativ oder zusätzlich kann wenigstens eine zweite Schraubenfeder zwischen dem zweiten stirnseitigen Ende der Ringfeder und dem zweiten Drehteil angeordnet sein.

Die zwischen erstem und zweiten Drehteil eingesetzte Ringfeder und die Schraubenfedern sind in Reihe geschaltet. Jede in Reihe geschaltete Feder wird mit der gleichen Kraft beaufschlagt. Eine weichere Feder beziehungsweise eine Feder mit einer kleineren Federkonstanten wird dabei stärker ausgelenkt. Schraubenfeder und Ringfeder sind vorzugsweise so aufeinander abgestimmt, daß die Ringfeder erst dann eine nennenswerte Energie aufnimmt, wenn der Federweg der Schraubenfedern erschöpft ist beziehungsweise wenn ein maximaler Verdrehwinkel zwischen erstem und zweitem Drehteil fast erreicht ist (der Federweg der Ringfeder ist in der Regel viel kleiner als der Federweg der Schraubenfeder). Somit federt und dämpft die Ringfeder die Drehbewegung der beiden Drehteile an den Enden des Verdrehwinkelbereichs ab. Dadurch werden Schläge aufgefangen, die insbesondere bei Lastwechseln auftreten können.

Anhand eines in den Figuren dargestellten bevorzugten Ausführungsbeispiels wird die Erfindung näher beschrieben. Es zeigen
- Figur 1: einen erfindungsgemäßen Drehschwingungsdämpfer mit einem ersten und zweiten Drehteil;
- Figur 2: den Drehschwingungsdämpfer der Figur 1, wobei das erste Drehteil bezogen auf das zweite Drehteil eine andere Drehposition einnimmt;
- Figur 3: eine vergrößerte Teilansicht der Figur 1; und
- Figur 4: eine vergrößerte Teilansicht der Figur 2.

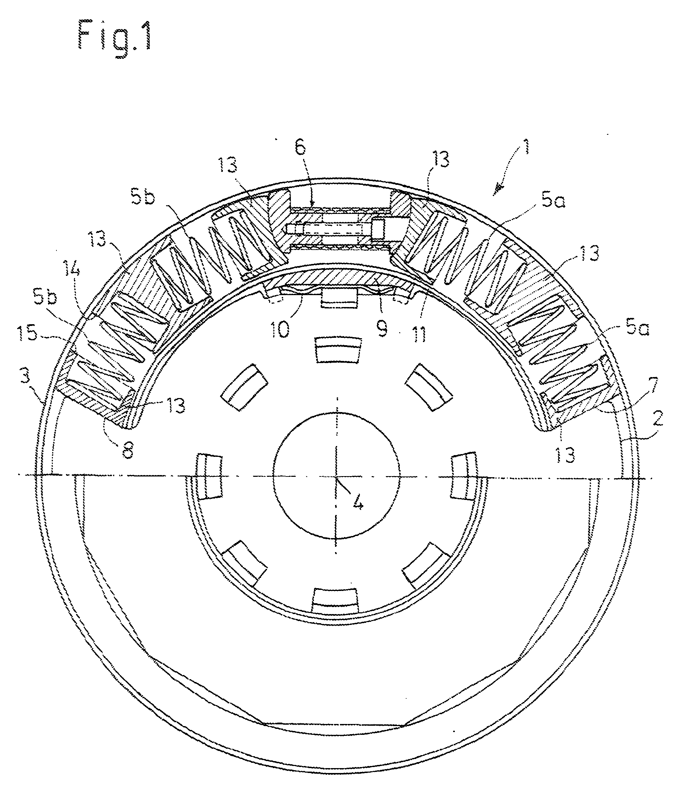

Figur 1 zeigt einen Drehschwingungsdämpfer 1 mit einem ersten Drehteil 2 und einem zweiten Drehteil 3. Das erste Drehteil 2 und das zweite Drehteil 3 sind um eine Drehachse 4 drehbeweglich angeordnet. Die Drehachse 4 erstreckt sich senkrecht zur Zeichnungsebene der Figur 1.

Zwischen dem ersten Drehteil 2 und dem zweiten Drehteil 3 sind in Umfangsrichtung Energiespeicher in Form von Schraubenfedern 5a, 5b angeordnet. Eine Schraubenfeder 5a, 5b erstreckt sich dabei mit ihrer Längsachse im Wesentlichen in Umfangsrichtung der beiden Drehteile. Zwischen jeweils zwei in Reihe geschalteten Schraubenfedern ist eine Ringfeder 6 angeordnet.

Das Federpaket, bestehend aus den Schraubenfedern 5a, 5b und der Ringfeder 6, stützt sich mit einem ersten Ende 7 gegen das erste Drehteil 2 ab, während sich ein zweites Ende 8 des Federpakts gegen das zweite Drehteil 3 abstützt. Somit wirkt das Federpaket, ausgehend von der in Figur 1 gezeigten Lage der beiden Drehteile 2, 3, einer relativen Drehbewegung der Drehteile 2, 3 entgegen. Figur 1 zeigt den Drehschwingungsdämpfer 1 in einer statischen Ruhelage.

An dem ersten Drehteil 2 ist drehfest ein Reibelement 9 befestigt. In radialer Richtung des ersten Drehteils 2 wird das Reibelement 9 mit der Kraft einer als Blattfeder ausgebildete Feder 10 gegen eine in ringförmige, nach innengerichtete Reibfläche 11 des zweiten Drehteils 3 gedrückt. Bewegen sich die Drehteile 2, 3 relativ zueinander, gleitet das Reibelement 9 entlang der Reibfläche 11. Die dabei verursachte Reibung wirkt einer relativen Drehbewegung der beiden Drehteile 2, 3 entgegen.

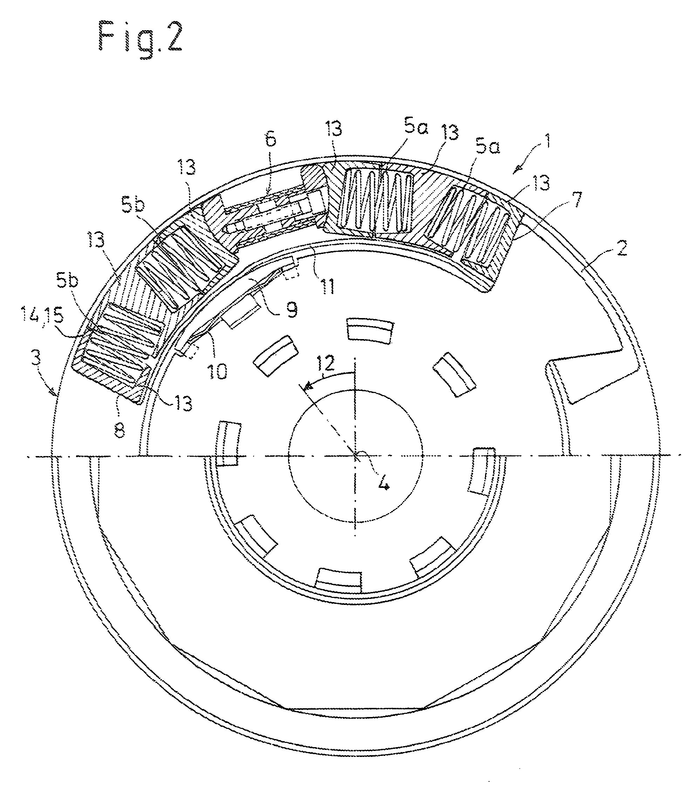

Figur 2 zeigt den Drehschwingungsdämpfer 1, wobei das erste Drehteil 2 im Vergleich zu der in Figur 1 gezeigten Lage gegen den Uhrzeigersinn verdreht ist. Dies wird auch deutlich an einem in Figur 2 gekennzeichneten Verdrehwinkel 12, der in der in Figur 1 gezeigten relativen Lage der beiden Drehteile 2, 3 den Wert null aufweist.

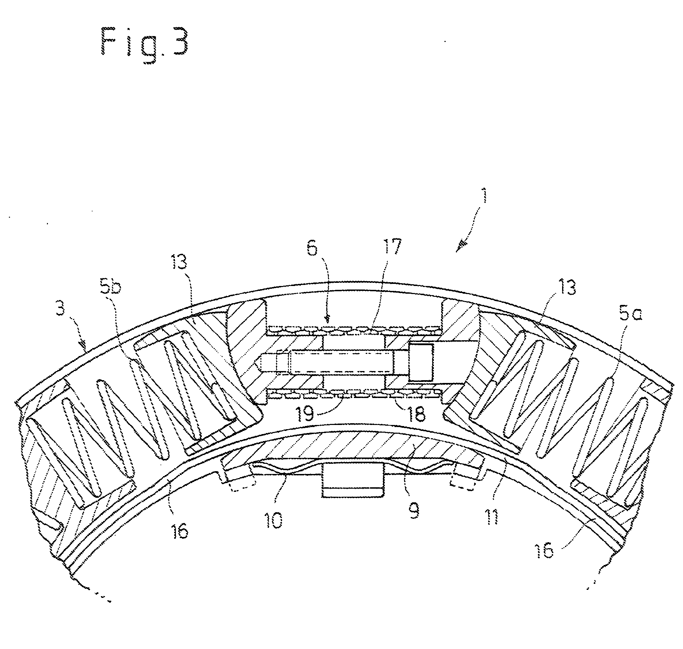

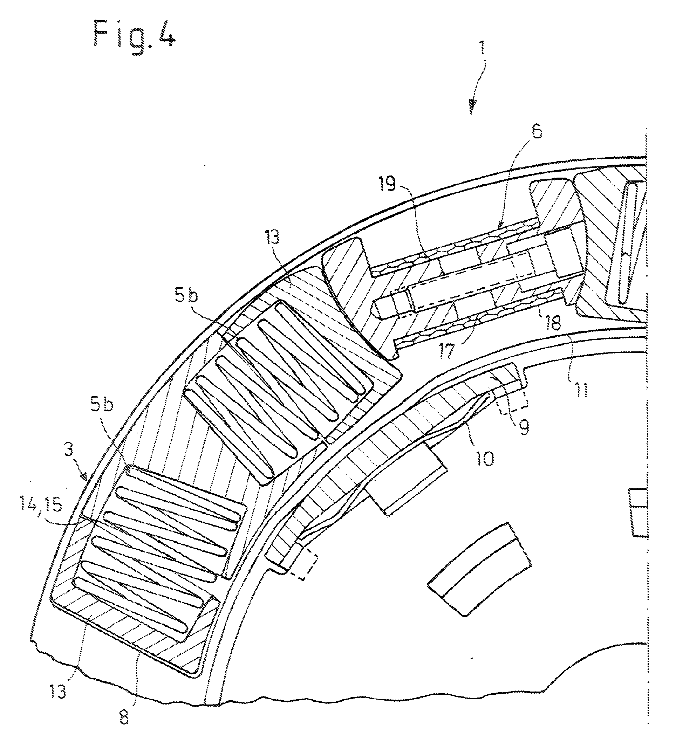

In der Lage der Figur 2 lassen sich die Schraubenfedern 5a, 5b nicht weiter zusammendrücken. Die Schraubenfedern 5a, 5b stützen sich jeweils an Schraubenfederhalterungen 13 ab, die in Umfangsrichtung jeweils zwei stirnseitige Enden 14, 15 aufweisen. Das stirnseitiges Ende 14 einer Schraubenfederhalterung 13 berührt dabei das gegenüberliegende, stirnseitige Ende 15 einer benachbarten Schraubenfederhalterung 13. Auch die Ringfeder 6 lässt sich in der Figur 2 gezeigten Lage nicht weiter zusammendrücken. Dies lässt sich besser den Figuren 3 und 4 entnehmen, die die Ringfeder 6 in einer vergrößerten Ansicht darstellen.

Figur 3 zeigen einen vergrößerten Ausschnitt des erfindungsgemäßen Drehschwingungsdämpfers 1 in der Lage gemäß Figur 1. Zu erkennen ist, daß die ringförmige Reibfläche 11 des zweiten Drehteils 3 zwei Abflachungen aufweist, die in Bezug von der in Figur 3 dargestellten Lage des Reibelements 9, die der statischen Ruhelage des Drehschwingungsdämpfers 1 entspricht, symmetrisch angeordnet sind. Werden das erste Drehteil 2 und das zweite Drehteil 3 relativ zueinander verdreht, gleitet, wie oben bereits beschrieben, das Reibelement 9 entlang der Reibfläche 11. Erreicht das Reibelement 9 die Abflachung 16, wird die Blattfeder 10 zusammengedrückt. Dadurch steigt die Federkraft der Blattfeder 10 an, was zu einer erhöhten Reibkraft zwischen ersten Drehteil 2 und zweiten Drehteil 3 führt. Insbesondere lässt sich der Fahrkomfort bei Fahrbedingungen, bei denen lediglich geringe oder mittlere Dämpfungsraten erforderlich sind, durch die oben beschriebene Reibanordnung, bestehend aus Reibelement 9, Blattfeder 10 und Reibfläche 11 mit Abflachungen 16, verbessern.

Die Ringfeder 6 weist mehrere Innenringe 17 und mehrere Außenringe 18 auf. Die Innenringe 17 und Außenringe 18 sind in abwechselnder Folge nacheinander in axialer Richtung der Ringfeder 6 angeordnet. Wird die Ringfeder 6 axial zusammengedrückt, schieben sich die Außenringe 18 auf die Innenringe 17. Dies erfolgt entlang der kegelförmigen Umfangsflächen der Innenringe 17 beziehungsweise der Außenringe 18. Wie schon oben beschrieben, stellt ein Außenring 18 ein Reibelement dar, das auf einer rampenförmigen Reibfläche 19 gleitet, wodurch beim Gleiten entlang der Reibfläche 19 der ebenfalls als Feder wirkende Außenring 18 weiter verformt wird. Für den Innenring 17 gilt sinngemäß das Gleiche.

In Figur 4 liegen die Innenringe 17 mit ihren stirnseitigen Enden aneinander an, so daß sie in axialer Richtung der Ringfeder 6 eine starre Säule bilden. Auch die Außenringe 18 bilden eine starre Säule. Die Ringfeder 6 kann nicht weiter zusammengedrückt werden. Unter Berücksichtigung, daß Figur 4 eine Teilvergrößerung der Figur 2 ist und daß in Figur 2 der Federweg der Schraubenfedern 5 erschöpft ist, stellt Figur 2 eine Lage der maximalen Verdrehung zwischen erstem Drehteil 2 und zweitem Drehteil 3 dar.

Da die Schraubenfedern 5a, 5b eine wesentlich geringere Federkonstante als die Ringfeder 6 aufweisen, werden, ausgehend von der in Figur 1 gezeigten Lage, bei einer relativen Drehbewegung der beiden Drehteile 2, 3 zunächst nur die Schraubenfedern 5a, 5b zusammengedrückt. Ist der maximale Federweg der Schraubenfedern 5 durch die gegenseitige Anlage der Schraubenfederhalterungen 13 erschöpft, wird bei weiterer relativen Drehbewegung der Drehteile 2, 3 die Ringfeder 6 zusammengedrückt. Somit werden Schläge zwischen den Drehteil 2, 3 in der unmittelbaren Nähe der maximalen Verdrehung der Drehteil 2, 3 durch die Ringfeder 6 abgefangen. Dies erhöht insbesondere den Fahrkomfort bei Lastwechseln im Antriebsstrang.

Das in den Figuren 1 bis 4 gezeigte bevorzugte Ausführungsbeispiel weist somit mehrere Reibelemente (z. B. Reibelement 9, Außenring 18) mit entsprechend zugeordneten Reibflächen 11,19 auf. Dabei ist deren Auslegung hinsichtlich Reibkraft in Abhängigkeit des Verdrehwinkels 12 sehr unterschiedlich. Durch geeignete Verwendung mehrerer Reibelemente 9, 18 mit entsprechend zugeordneten rampenförmigen Reibflächen 11, 19 lassen sich daher die zum Teil sehr unterschiedlichen Anforderungen an das Dämpfungsverhalten eines Drehschwingungsdämpfers 1 in einfacher Weise erfüllen.

## Patentansprüche

1. Drehschwingungsdämpfer (1), insbesondere für Kraftfahrzeuge, mit wenigstens einem Drehteil (2) und einem zweiten Drehteil (3), wobei
- die beiden Drehteil (2,3) auf einer Drehachse (4) angeordnet sind und entgegen der Wirkung wenigstens eines Energiespeichers (5a, 5b) relativ zueinander drehbeweglich sind,
- bei einer Drehbewegung zwischen erstem (2) und zweitem Drehteil (3) wenigstens ein Reibelement (18) entlang einer Reibfläche (19) gleitet und
- wenigstens eine Feder (6) das Reibelement (18) gegen die Reibfläche (19) drückt, wobei die Reibfläche (19) als Rampe ausgebildet ist, wodurch beim Gleiten des Reibelementes (18) entlang der Reibfläche (19) die Feder (6) verschieden weit ausgelenkt wird,
**dadurch gekennzeichnet, dass**
das Reibelement (18) und die Reibfläche (19) ein. Element einer Ringfeder (6) bilden, wobei die Ringfeder (6) mehrere, in axialer Richtung der Ringfeder hintereinander angeordnete Innenringe (17) und Außenringe (18) aufweist, wobei ein Innenring (17) wenigstens eine nach außen gerichtete Kegelfläche aufweist, ein Außenring (18) wenigstens eine nach innen gerichtete Kegelfläche aufweist, und die Kegelfläche des Außenrings (18) die Kegelfläche des Innenrings (17) berührt.

2. Drehschwingungsdämpfer (1) nach Anspruch 1,
**dadurch gekennzeichnet, daß**
die Ringfeder (6) einen maximalen Federweg aufweist, der durch die Anlage von stirnseitigen Enden der Innenringe (17) und/oder durch Anlage von stirnseitigen Enden der Außenringe (18) definiert wird.

3. Drehschwingungsdämpfer (1) nach Anspruch 1,
**dadurch gekennzeichnet, daß**
die Achse der Ringfeder (6) im Wesentlichen in Umfangsrichtung des ersten und zweiten Drehteils (2, 3) verläuft, wobei ein erstes stirnseitiges Ende der Ringfeder (6) sich in Umfangsrichtung an dem ersten Drehteil (2) abstützt und ein zweites stirnseitiges Ende der Ringfeder (6) sich in Umfangsrichtung an dem zweiten Drehteil (3) abstützt.

4. Drehschwingungsdämpfer (1) nach Anspruch 3,
**dadurch gekennzeichnet, daß**
in Umfangsrichtung des ersten und zweiten Drehteils (2, 3) zwischen dem ersten stirnseitigen Ende der Ringfeder (6) und dem ersten Drehteil (2) wenigstens eine erste Schraubenfeder (5a) angeordnet ist und/oder zwischen dem zweiten stirnseitigen Ende der Ringfeder (6) und dem zweiten Drehteil. (3) wenigstens eine zweite Schraubenfeder (5b) angeordnet ist.

## Claims

1. Torsional vibration damper (1), especially for motor vehicles, having at least a rotatable component (2) and a second rotatable component (3),
- the two rotatable components (2, 3) being arranged on one axis of rotation (4) and being rotationally moveable in relation to one another against the action of at least one energy storage device (5a, 5b),
- at least one friction element (18) sliding along a friction face (19) under a rotational movement between the first rotatable component (2) and the second rotatable component (3), and
- at least one spring (6) pressing the friction element (18) against the friction face (19), the friction face (19) being embodied as a ramp, so that the spring (6) is deflected to a varying degree as the friction element (18) slides along the friction face (19),
**characterized in that** the friction element (18) and the friction face (19) form an element of an annular spring (6), the annular spring (6) comprising a plurality of inner rings (17) and outer rings (18) arranged in series in the axial direction of the annular spring, an inner ring (17) comprising at least one outward facing conical surface, an outer ring (18) comprising at least one inward facing conical surface, and the conical surface of the outer ring (18) being in contact with the conical surface of the inner ring (17).

2. Torsional vibration damper (1) according to Claim 1, **characterized in that** the annular spring (6) has a maximum spring travel, which is defined by the abutment of end faces of the inner rings (17) and/or by the abutment of end faces of the outer rings (18).

3. Torsional vibration damper (1) according to Claim 1, **characterized in that** the axis of the annular spring (6) runs substantially in the peripheral direction of the first and second rotatable components (2, 3), a first end face of the annular spring (6) resting peripherally on the first rotatable component (2) and a second end face of the annular spring (6) resting peripherally on the second rotatable component (3).

4. Torsional vibration damper (1) according to Claim 3, **characterized in that** in the peripheral direction of the first and second rotatable components (2, 3) at least a first helical spring (5a) is arranged between the first end face of the annular spring (6) and the first rotatable component (2) and/or at least a second helical spring (5b) is arranged between the second end face of the annular spring (6) and the second rotatable component (3).

## Revendications

1. Amortisseur de vibrations torsionnelles (1), en particulier pour véhicules automobiles, comprenant au moins une partie rotative (2) et une deuxième partie rotative (3),
- les deux parties rotatives (2, 3) étant disposées sur un axe de rotation (4) et pouvant être déplacées en rotation l'une par rapport à l'autre à l'encontre de l'action d'au moins un accumulateur d'énergie (5a, 5b),
- en cas de mouvement de rotation entre la première (2) et la deuxième partie rotative (3), au moins un élément de friction (18) glissant le long d'une surface de friction (19), et
- au moins un ressort (6) pressant l'élément de friction (18) contre la surface de friction (19), la surface de friction (19) étant réalisée sous forme de rampe, de sorte que lors du glissement de l'élément de friction (18) le long de la surface de friction (19), le ressort (6) soit dévié de manière différente,
**caractérisé en ce que**
l'élément de friction (18) et la surface de friction (19) forment un élément d'un ressort annulaire (6), le ressort annulaire (6) présentant plusieurs bagues intérieures (17) et bagues extérieures (18) disposées les unes derrière les autres dans la direction axiale du ressort annulaire, une bague intérieure (17) présentant au moins une surface conique orientée vers l'extérieur, une bague extérieure (18) présentant au moins une surface conique orientée vers l'intérieur, et la surface conique de la bague extérieure (18) venant en contact avec la surface conique de la bague intérieure (17).

2. Amortisseur de vibrations torsionnelles (1) selon la revendication 1,
**caractérisé en ce que**
le ressort annulaire (6) présente une course de ressort maximale qui est définie par la venue en butée d'extrémités frontales des bagues intérieures (17) et/ou par la venue en butée d'extrémités frontales des bagues extérieures (18).

3. Amortisseur de vibrations torsionnelles (1) selon la revendication 1,
**caractérisé en ce que**
l'axe du ressort annulaire (6) s'étendant essentiellement dans la direction périphérique de la première et de la deuxième partie rotative (2, 3), une première extrémité frontale du ressort annulaire (6) s'appuyant dans la direction périphérique contre la première partie rotative (2) et une deuxième extrémité frontale du ressort annulaire (6) s'appuyant dans la direction périphérique contre la deuxième partie rotative (3).

4. Amortisseur de vibrations torsionnelles (1) selon la revendication 3,
**caractérisé en ce que**
dans la direction périphérique de la première et de la deuxième partie rotative (2, 3) entre la première extrémité frontale du ressort annulaire (6) et la première partie rotative (2) est disposé au moins un premier ressort à boudin (5a), et/ou entre la deuxième extrémité frontale du ressort annulaire (6) et la deuxième partie rotative (3) est disposé au moins un deuxième ressort à boudin (5b).
